# EUROPÄISCHE PATENTANMELDUNG

(11) **EP 1 430 763 A2**
(43) Veröffentlichungstag der Anmeldung: **23.06.2004**
(21) Anmeldenummer: 03028859.1
(22) Anmeldetag: 16.12.2003
(51) Int. Cl.: A01C 17/00

(54) **Zentrifugaldüngerstreuer**

(30) Priorität: 19.12.2002 DE 10259511; 19.12.2002 DE 10259473
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Walter, Achim, 49078 Osnabrück (DE)

(57) **Zusammenfassung**

Zentrifugaldüngerstreuer mit einem Rahmen 1 und einem zumindest einem Dosierorgan aufweisenden Vorratsbehälter, von dem aus das Material in einstellbaren Mengen einer Wurfschaufeln aufweisenden Schleuderscheibe zugeführt wird, wobei unterhalb des Dosierorgans zumindest ein zylindrischer Vorbeschleunigungsraum mit einem, um das Zentrum des Vorbeschleunigungsraumes rotierenden Boden angeordnet ist, wobei die Wurfschaufeln mit ihren inneren Enden unmittelbar an der Außenwand des Vorbeschleunigungsraumes beginnen, wobei in dem Vorbeschleunigungsraum ein kegelförmiges Element angeordnet ist, dessen unterer Bereich über den Vorbeschleunigungsraum hinaus und bis in den unteren dem Vorbeschleunigungsraum benachbarten Bereich der Wurfschaufel reicht. Zentrifugalstreuer zum Verteilen von gekörnten Düngemitteln, bei dem das Streugut aus einem Vorratsbehälter durch zumindest einen in ihrer Ausflussgröße veränderbare Auslauföffnung auf eine oder mehreren um aufrechte Achsen rotierend angetriebene Schleuderscheiben gelangt, wobei die Schleuderscheibe eine kegelige oder kegelstumpfförmige Erhöhung aufweist, deren Mittelachse mit der Drehachse der Schleuderscheibe zusammenfällt, wobei auf der Schleuderscheibe mehrere Wurfschaufeln angeordnet sind, die sich von der Erhöhung in Richtung des Scheibenrandes erstrecken, wobei die Kontur der Auslauföffnung in Draufsicht gesehen innerhalb des von der Erhöhung begrenzten Bereiches liegt und derart ausgestaltet ist, dass sie dem Verlauf der Düngerkörner auf der Erhöhung entspricht, so dass die Länge des Übergabebereiches der Körner von der Erhöhung in die Wurfschaufel bei jeder Durchflussgröße der Auslauföffnung zumindest annähernd immer gleich lang ist.

## Beschreibung

Die Erfindung betrifft einen Zentrifugaldüngerstreuer mit einem Rahmen und zumindest einem Dosierorgan aufweisenden Vorratsbehälter, von dem aus das Material in einstellbaren Mengen einer Wurfschaufel aufweisenden Schleuderscheibe zugeführt wird. Unterhalb des Dosierorgans ist zumindest ein zylindrischer Vorbeschleunigungsraum mit ein um das Zentrum des Vorbeschleunigungsraumes rotierenden Boden angeordnet. Die Wurfschaufeln beginnen mit ihren inneren Enden unmittelbar an der Außenwand des Vorbeschleunigungsraumes. In dem Vorbeschleunigungsraum ist ein kegelförmiges Element angeordnet.

Ein derartiger Zentrifugaldüngerstreuer ist beispielsweise in der deutschen Offenlegungsschrift 199 53 074 beschrieben. Der Erfindung liegt die Aufgabe zugrunde, eine gezielte und schonende Einführung des Düngers aus dem Vorbeschleunigungsraum in die Wurfschaufeln zu erzielen.

Durch die deutsche Offenlegungsschrift 15 57 916 ist ein Zentrifugalstreuer bekannt geworden, der eine speziell gestaltete Auslauföffnung aufweist, um den sogenannten Mengeneffekt auszuschalten. Es soll erreicht werden, dass bei unterschiedlich großen Ausbringmengen eine gleichmäßige Düngerverteilung erreicht wird.

Diese Aufgabe wird erfindungsgemäß durch die Merkmale des Patentanspruches 1 gelöst. Insbesondere von entscheidender Bedeutung, das der untere Bereich des kegelförmigen Elementes über dem Vorbeschleunigungsraum hinaus und bis in den unteren Vorbeschleunigungsraum benachbarten Raum hinein ragt. Hierdurch wird vermieden, das der Dünger auf die Plane Schleuderscheibe fällt und unkontrolliert springt. Dadurch das der kegelförmige Bereich über den Vorbeschleunigungsraum hinaus bis in den inneren Bereich der Wurfschaufeln hinein ragt wird eine ruhige und gezielte Einleitung des Düngers aus dem Vorbeschleunigungsraum in die Wurfschaufeln erreicht.

Um einen guten Abschluss des Vorbeschleunigungsraumes bzw. Abdichtung des Vorbeschleunigungsraumes zu, in den Wurfschaufeln und den äußeren Kegelbereich zu erreichen, ist vorgesehen das kegelförmige Element eine umlaufende Nut im Bereich der umlaufenden Wand des Vorbeschleunigungsraumes aufweist, dass die Wand des Vorbeschleunigungsraumes in diese Nut eingreift. Hierdurch kann die Unterseite der Wand des Vorbeschleunigungsraumes ein kleinen Abstand zu den rotierenden Teilen aufweisen, so dass eine Reibung bzw. ein schleifen der Wand an den kegelförmigen Element vermieden wird.

Um einen guten Anschluss des inneren Bereiches der Wurfschaufeln an die kegelförmige Erhöhung zu erreichen, ist vorgesehen, die Wurfschaufeln in ihrem unteren und der Vorbeschleunigungskammer benachbarten Bereich eine an das kegelförmige Element angepasste Aussparung aufweisen.

In einer anderen Ausführungsform ist, um einen guten Anschluss der Wurfschaufeln an den äußeren Bereich des kegelförmigen Elementes zu erreichen, vorgesehen, in dem über die Wand des Vorbeschleunigungsraumes hinausragenden Bereich des kegelförmigen Leitelementes im Bereich der Wurfschaufeln Aussparungen angeordnet sind, in welche die Wurfschaufeln hineingreifen.

In einer vorteilhaften Ausgestaltung der Erfindung ist vorgesehen, die Nut, die in dem kegelförmigen Element angebracht ist, bzw. die Wand des Vorbeschleunigungsraumes in einem derartigen Bereich angeordnet ist, dass der Abstand zwischen der Schleuderscheibe bzw. dem Boden des Vorbeschleunigungsraumes das Leitelement etwas 1/3 der Höhe der Wurfschaufeln aufweist. Versuche haben gezeigt, das durch diese Anordnung der Nut an dem kegelförmigen Element ein besonders gutes Einleiten des Düngers in die Schaufeln erreicht wird.

Um eine gezielte Übergabe des Düngers in die Wurfschaufeln an einer vorbestimmten Stelle und somit eine gleichmäßige Düngerverteilung zu erzielen, ist vorgesehen, in der Wand des Vorbeschleunigungsraumes in dem Bereich der Wurfschaufeln eine Öffnung als Übergabebereich des Materials aus dem Vorbeschleunigungsraum in die Schleuderscheibe angeordnet ist. Um den Schleuderdüngerstreuer auf die verschiedenen Streu- und Wurfeigenschaften der auszubringenden Dünger einzustellen und eine gleichmäßige Düngerverteilung für die verschiedenen Düngersorten zu gewährleisten, ist vorgesehen, das die Außenwand des Vorbeschleunigungsraumes mit der Durchtrittsöffnung um die Drehachse des Vorbeschleunigungsraumes verdrehbar und in verschiedenen Positionen einstellbar ist. Somit wird also durch die verschiedenen Maßnahmen, wie im Anspruch 1 beschrieben, erreicht eine gezielte und schonende Einführung des Düngers aus dem Vorbeschleunigungsraumes in die Wurfschaufeln zu erzielen.

Um die Auslauföffnung so auszugestalten, dass der Dünger unabhängig von der eingestellten Ausbringmenge immer auf dem gleichen Umfangsabschnitt in die Streuschaufeln überführt wird, sind die Merkmale des Anspruches 8 vorgesehen. Durch die kegelige bzw. kegelstumpfförmige Erhöhung und die Ausgestaltung der Kontur der Auslauföffnung wird der Dünger weich und immer in dem gleichen Umfangsbereich der Schleuderscheibe in die Streuschaufeln eingeführt. Als vorteilhaft hat sich herausgestellt, dass die Durchflussgröße der Auslassöffnung vom Scheibenmittenbereich in Richtung des Randes der Erhöhung mittels eines verstellbaren Schiebers vergrößerbar ist.

Eine besonders einfache Ausgestaltung der Auslauföffnung kann dadurch erreicht werden, dass die Auslassöffnung dreieckförmig mit runden Ecken ausgebildet ist.

Um auch bei kritischen Düngersorten zu gewährleisten, dass der Dünger immer auf dem gleichen Umfangsabschnitt in die Streuschaufeln überführt wird, ist vorgesehen, dass die Auslauföffnung sich entgegen der Drehrichtung der Schleuderscheibe verschwenkt angeordnet ist.

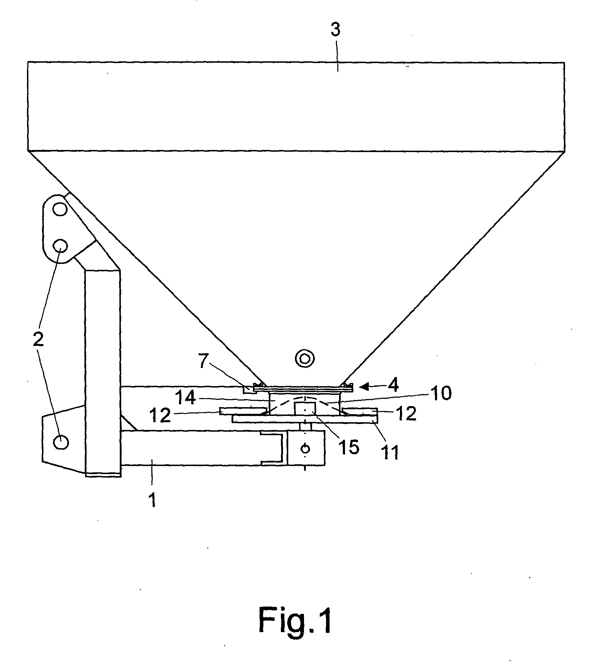

Weitere Einzelheiten der Erfindung sind den Zeichnungen und der Beispielsbeschreibung zu entnehmen. Hierbei zeigen
- Fig. 1: einen Schleuderdüngerstreuer in Seitenansicht und in Prinzipdarstellung,
- Fig. 2: die Zuordnung von Dosierorgan- und Schleuderscheiben in Seitenansicht und vergrößerten Maßstab,
- Fig. 3: die Zuordnung von Vorbeschleunigungsraum und Wurfschaufeln im Schnitt, in Prinzipdarstellung und in vergrößerter Darstellung,
- Fig. 4: die Schleuderscheibe mit Vorbeschleunigungsraum in der Ansicht IV /IV
- Fig. 5: die Zuordnung von Erhöhung, Wurfschaufeln und Vorbeschleunigungsraum im Schnitt und vergrößertem Maßstab,
- Fig. 6: die Zuordnung von Dosierorgan und Schleuderscheibe in der Seitenansicht und in Prinzipdarstellung,
- Fig. 7: das Dosierorgan und die Schleuderscheibe in Seitenansicht und vergrößertem Maßstab
- Fig. 8: das Dosierorgan mit der Schleuderscheibe in Ansicht III-III und
- Fig. 9: die Zuordnung der Auslauföffnung zu der Schleuderscheibe in der Ansicht IV -IV und in Prinzipdarstellung.

Der Schleuderdüngerstreuer weist den Rahmen 1 auf, der auf seiner Vorderseite 3-Punkt Kupplungselemente 2 zum Anbau an den 3-Punktkraftheber eines Schleppers aufweist. Im Rahmen 1 des Schleuderdüngerstreuers ist der Vorratsbehälter 3 angeordnet, dessen unteres trichterförmiges Ende mittels eines Dosierorgans 4, welches zumindest eine in einer Bodenplatte 5 angeordnete Auslauföffnung 6 und ein zugeordneten mittels Einstellelementen 7 einstellbaren Schieber 8 aufweist, abgeschlossen ist. Unterhalb des Dosierorgans 4 ist ein zylindrischer Vorbeschleunigungsraum 9, dessen Ausbildung und Wirkungsweise weiter unten erläutert wird, angeordnet. Der Boden des Vorbeschleunigungsraumes 9 wird von einer kegelförmigen oder kegelstumpfförmigen Erhöhung 10 gebildet. Diese kegelförmige Erhöhung 10 ist Bestandteil der rotierend angetriebenen Schleuderscheibe 11, die unterhalb des Dosierorgans 4 angeordnet ist. Auf der Schleuderscheibe 11 sind die Wurfschaufeln 12 angeordnet. Die Schleuderscheibe 11 wird in Pfeilrichtung 13 rotierend angetrieben.

Der Vorbeschleunigungsraum 9 weist die Ringwand 14 auf, die in einem Bereich die Übergabeöffnung 15 besitzt. Der untere Bereich 16 des kegelförmigen Elementes 10 ragt über die von der Ringwand 14 begrenzten Vorbeschleunigungsraum 9 hinaus. Der untere Bereich 16 des kegelförmigen Elementes 10 reicht bis in den unteren, dem Vorbeschleunigungsraum 9 benachbarten Bereich 17 der Wurfschaufeln 12 hinein. Der innere Bereich 18 der Wurfschaufeln 12 reicht bis unmittelbar an die Außenwand der Ringwand 14 des Vorbeschleunigungsraumes 9 heran.
Das kegelförmige Element 10 weist eine umlaufende Nut 19 im Bereich der umlaufenden Ringwand 14 des Vorbeschleunigungsraumes 9 auf. Die Wand 14 des Vorbeschleunigungsraumes 9 greift in diese Nut 19 hinein. Der Abstand zwischen der Schleuderscheibe bzw. dem Boden des Vorbeschleunigungsraumes und dem unteren Ende 20 der Ringwand 14 befindet sich auf etwa 1/3 der Höhe der Wurfschaufeln 12.

In der Wand 14 des Vorbeschleunigungsraumes 9 ist in dem Bereich der Wurfschaufeln 12 eine Öffnung 15 als Übergabebereich des Materials aus dem Vorbeschleunigungsraum 9 in die Wurfschaufeln Schleuderscheibe 11 angeordnet.

Die Ringwand 14 des Vorbeschleunigungsraumes 9 mit der Durchtrittsöffnung 15 ist um die Drehachse des Vorbeschleunigungsraumes 9 verdrehbar und in verschiedenen Positionen mittels des Einstellelementes 21 einstellbar.

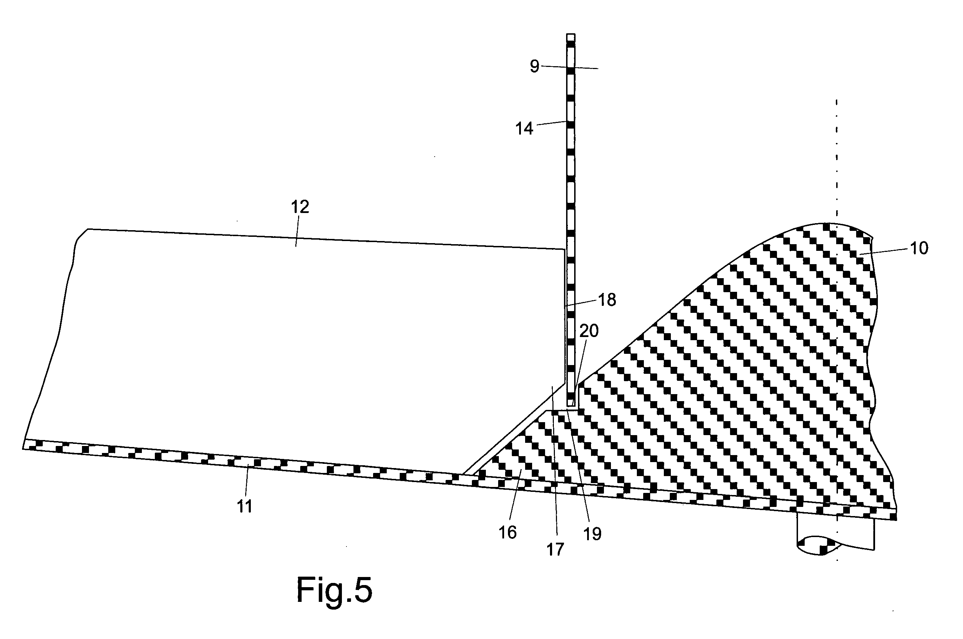

Die Wurfschaufeln 12 weisen in ihren unteren und der Vorbeschleunigungskammer 9 benachbarten Bereich eine an das kegelförmige Element 10 angepasste Aussparung auf, wie die Fig. 5 zeigt.

Es ist auch möglich, das in dem die Wand des Vorbeschleunigungsraumes 9 hinausragenden Bereiches des kegelförmigen Elementes 10 im Bereich der Wurfschaufeln 12 Aussparungen, die an die Kontur der Wurfschaufeln 12 angepasst sind, angeordnet sind, in welche die Wurfschaufeln hineingreifen.

Die Funktion des kegelförmigen Elementes 10 und die Übergabe des Düngers aus der Vorbeschleunigungskammer 9 in die Wurfschaufeln 12 erfolgt in folgender Weise:

Durch die Auslauföffnung 6, deren Größe durch den Schieber 8 einstellbar ist, gelangt das sich im Vorratsbehälter 3 befindliche Material auf die kegelförmige Erhöhung 10. Über die kegelförmige Erhöhung 10 wird das Material in der Vorbeschleunigungskammer 9 beschleunigt und durch die Öffnung 15 in der Wand 14 des Vorbeschleunigungsraumes 9 in die Wurfschaufeln 12 der Schleuderscheibe 11 übergeben. Dadurch, dass die kegelförmige Erhöhung 10 über den Vorbeschleunigungsraum 9 bis in die Wurfschaufeln 12 hineinragt, wird eine gezielte und schonende Einführung des Düngers in den Vorbeschleunigungsraum in die Wurfschaufel erzielt. Hierdurch wird vermieden, das der Dünger auf die Scheibe fällt und unkontrolliert springt.

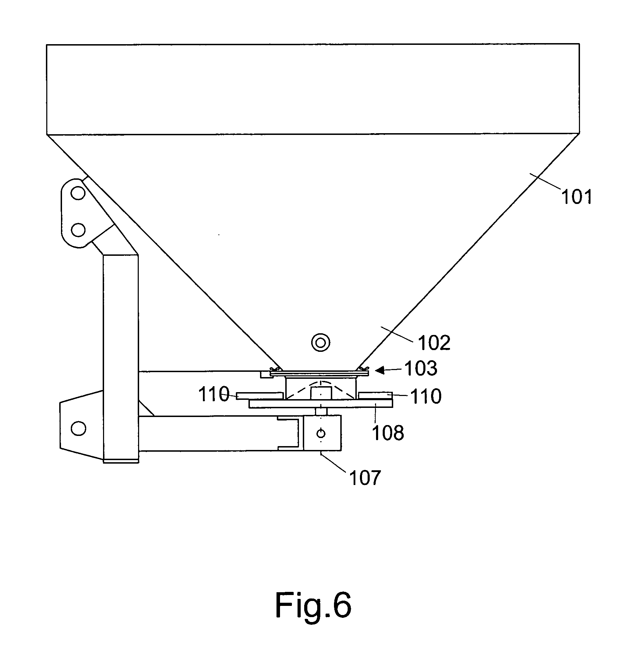

Der Schleuderdüngerstreuergemäß der Fig. 6 bis 9 weist einen Vorratsbehälter 101 mit zwei trichterförmigen Auslaufbereichen 102 auf, deren unterer Bereich durch ein Dosierorgan 103 abgeschlossen ist. Das Dosierorgan 103 besteht aus einer Bodenplatte 104 mit einer Auslauföffnung 105, deren Ausflussgröße durch einen verstellbaren Schieber 106, der vorzugsweise mittels eines nicht dargestellten nicht dargestellten motorischen Einstellelementes 107 ein- und verstellbar ist. Unterhalb des Dosierorgans 103 ist jeweils eine um eine aufrechte Achse 107 rotierend angetriebene Schleuderscheibe 108 angeordnet. Auf der Schleuderscheibe 107 sind Wurfschaufeln 108 angeordnet. Das sich im Vorratsbehälter 101 befindliche Material wird über das Dosierorgan 103 der Schleuderscheibe 108 in einstellbaren Mengen zugeleitet. Die Schleuderscheibe 108 weist eine kegelige bzw. kegelstumpfförmige Erhöhung 109 auf, deren Mittelachse der Drehachse der Schleuderscheibe 108 zusammenfällt. Auf der Schleuderscheibe 8 sind mehrere Wurfschaufeln 110 angeordnet, die sich von dem unteren Bereich der Erhöhung 109 in Richtung des Scheibenrandes 111 erstrecken.

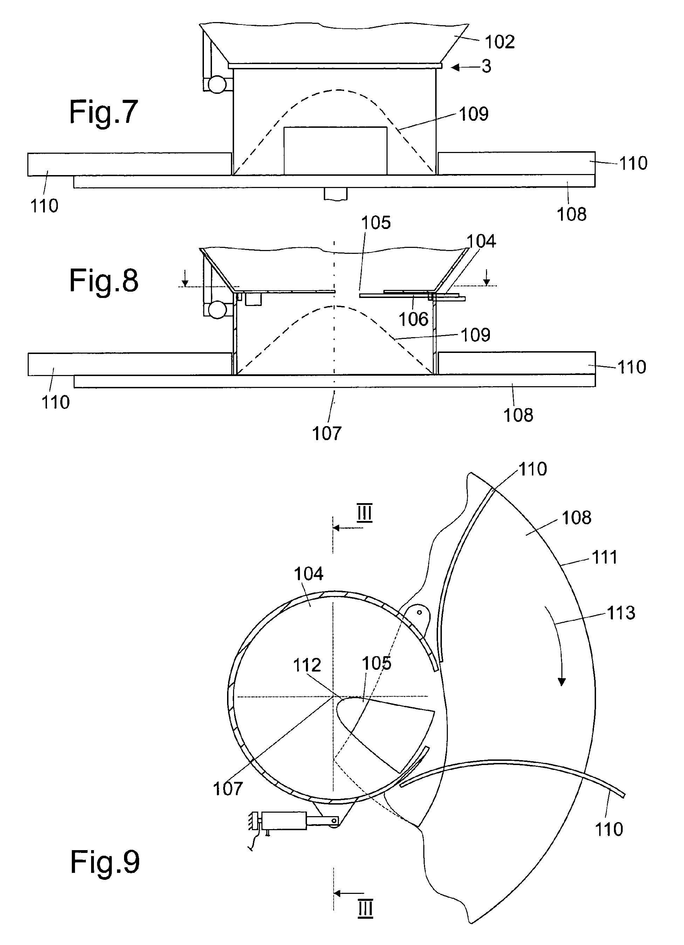

Die Auslauföffnung 105 weist in der Draufsicht gesehen eine dreieckförmige Ausbildung mit runden Ecken auf, wobei sich die schmale Seite 112 des Dreieckes in der Nähe der Drehachse 107 der Schleuderscheibe 108 befindet und sich die Auslauföffnung 105 in Richtung des Schleuderscheibenrandes 110 erweitert. Die Kontur der Auslauföffnung 105 liegt in Draufsicht gesehen innerhalb des von der Erhöhung 109 begrenzten Bereiches, wie die Fig. 9 zeigt. Die Kontur der Auslauföffnung 105 ist derart gestaltet, das sie dem Verlauf der aus der Auslauföffnung 105 auf die Erhöhung gelangenden Düngerkörner auf der Erhöhung 109 entspricht, so dass die Länge des Übergabebereiches der Körner von der Erhöhung 109 in die Wurfschaufeln 110 bei jeder Durchflussgröße der Auslauföffnung 105 zumindest annähernd gleich lang ist. Somit ist sichergestellt, dass der Dünger unabhängig von der eingestellten Ausbringmenge immer auf dem gleichen Umfangsabschnitt in die Wurfschaufeln 110 geführt wird.

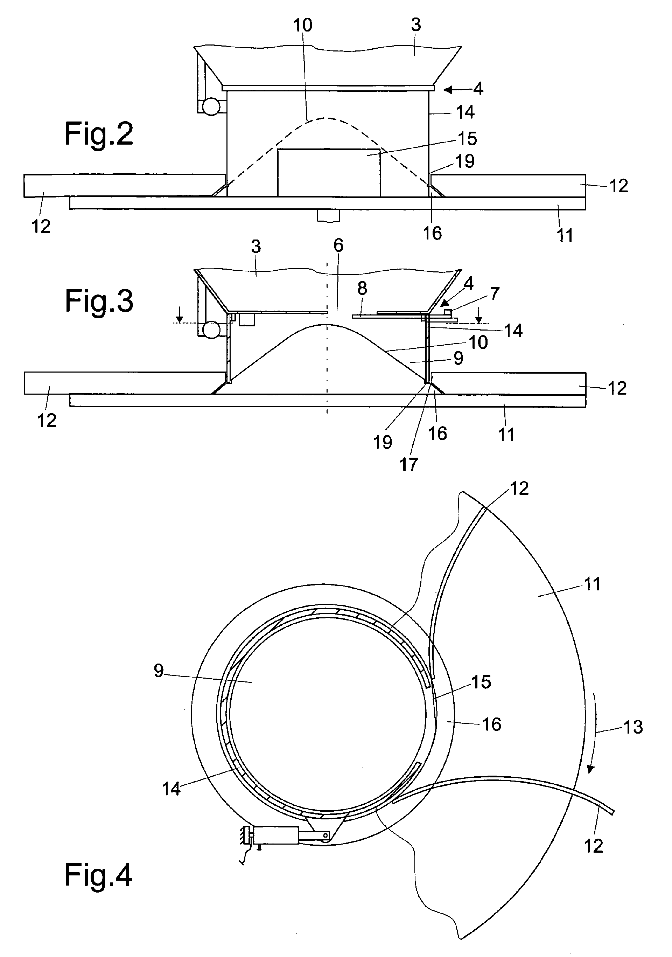

Die Durchflussgröße der Auslauföffnung 105 ist von der Scheibenmitte in Richtung des Randes 111 mittels eines verstellbaren Schiebers 106 vergrößerbar, wie die Fig. 4 zeigt. Die Auslauföffnung ist entgegen der Drehrichtung 113 verschwenkt angeordnet, wie die Fig. 9 zeigt. Die Kontur der Auslauföffnung 105 ist also so gestaltet, dass sie dem Verlauf der Düngerkörner auf der Erhöhung 109 entspricht. Die Länge des Übergabebereiches in die Schaufeln 110 ist immer gleichlang. Hierdurch soll eine gleichmäßige Düngerverteilung auf der Bodenoberfläche bei jeder eingestellten Ausbringmenge erreicht werden.

## Patentansprüche

1. Zentrifugaldüngerstreuer mit einem Rahmen 1 und einem zumindest einem Dosierorgan (4) aufweisenden Vorratsbehälter (3), von dem aus das Material in einstellbaren Mengen einer Wurfschaufeln aufweisenden Schleuderscheibe (11) zugeführt wird, wobei unterhalb des Dosierorgans (4) zumindest ein zylindrischer Vorbeschleunigungsraum (9) mit einem, um das Zentrum des Vorbeschleunigungsraumes (9) rotierenden Boden angeordnet ist, wobei die Wurfschaufeln (12) mit ihren inneren Enden unmittelbar an der Außenwand des Vorbeschleunigungsraumes (9) beginnen, wobei in dem Vorbeschleunigungsraum (9) ein kegelförmiges Element (10) angeordnet ist, dessen unterer Bereich (16) über den Vorbeschleunigungsraum (9) hinaus und bis in den unteren dem Vorbeschleunigungsraum (9) benachbarten Bereich der Wurfschaufel (12) reicht.

2. Zentrifugaldüngerstreuer nach Anspruch 1, **dadurch gekennzeichnet, dass** das kegelförmige Element (10) eine umlaufende Nut (19) im Bereich der umlaufenden Wand (14) des Vorbeschleunigungsraumes (9) aufweist, dass die Wand (14) des Vorbeschleunigungsraumes (9) in diese Nut (19) eingreift.

3. Zentrifugaldüngerstreuer nach einem oder mehreren der vorstehenden Ansprüche, **dadurch gekennzeichnet, dass** die Wurfschaufeln (12) in ihrem unteren und der Vorbeschleunigungskammer (9) benachbarten Bereich eine an das kegelförmige Element (10) angepasste Aussparung aufweisen.

4. Zentrifugaldüngerstreuer nach einem oder mehreren der vorstehenden Ansprüche, **dadurch gekennzeichnet, dass** in dem über die Wand (14) des Vorbeschleunigungsraumes (9) hinausragenden Bereich des kegelförmigen Leitelementes (10) im Bereich der Wurfschaufeln (12) Aussparungen angeordnet sind, in welche die Wurfschaufeln hineingreifen.

5. Zentrifugaldüngerstreuer nach einem oder mehreren der vorstehenden Ansprüche, **dadurch gekennzeichnet, dass** die Nut (19), die in dem kegelförmigen Element (10) angebracht ist, bzw. die Wand (14) des Vorbeschleunigungsraumes (9) in einem derartigen Bereich angeordnet ist, dass der Abstand zwischen der Schleuderscheibe bzw. dem Boden des Vorbeschleunigungsraumes (9) das Leitelement etwas 1/3 der Höhe der Wurfschaufeln (12) aufweist.

6. Zentrifugaldüngerstreuer nach einem oder mehreren der vorstehenden Ansprüche, **dadurch gekennzeichnet, dass** in der Wand (14) des Vorbeschleunigungsraumes (9) in dem Bereich der Wurfschaufeln (12) eine Öffnung (15) als Übergabebereich des Materials aus dem Vorbeschleunigungsraum (9) in die Schleuderscheibe (11) angeordnet ist.

7. Zentrifugaldüngerstreuer nach einem oder mehreren der vorstehenden Ansprüche, **dadurch gekennzeichnet, dass** das die Außenwand des Vorbeschleunigungsraumes (9) mit der Durchtrittsöffnung (15) um die Drehachse des Vorbeschleunigungsraumes (9) verdrehbar und in verschiedenen Positionen einstellbar ist.

8. Zentrifugalstreuer zum Verteilen von gekörnten Düngemitteln, bei dem das Streugut aus einem Vorratsbehälter durch zumindest einen in ihrer Ausflussgröße veränderbare Auslauföffnung auf eine oder mehreren um aufrechte Achsen rotierend angetriebene Schleuderscheiben gelangt, wobei die Schleuderscheibe eine kegelige oder kegelstumpfförmige Erhöhung aufweist, deren Mittelachse mit der Drehachse der Schleuderscheibe zusammenfällt, wobei auf der Schleuderscheibe mehrere Wurfschaufeln angeordnet sind, die sich von der Erhöhung in Richtung des Scheibenrandes erstrecken, wobei die Kontur der Auslauföffnung in Draufsicht gesehen innerhalb des von der Erhöhung begrenzten Bereiches liegt und derart ausgestaltet ist, dass sie dem Verlauf der Düngerkörner auf der Erhöhung entspricht, so dass die Länge des Übergabebereiches der Körner von der Erhöhung in die Wurfschaufel bei jeder Durchflussgröße der Auslauföffnung zumindest annähernd immer gleich lang ist.

9. Zentrifugalstreuer nach Anspruch 8, **dadurch gekennzeichnet, dass** die Durchflussgröße der Auslassöffnung von Scheibenmitte in Richtung des Randes der Erhöhung mittels eines verstellbaren Schiebers vergrößerbar ist.

10. Zentrifugalstreuer nach Anspruch 8, **dadurch gekennzeichnet, dass** die Auslassöffnung dreieckförmig mit runden Ecken ausgestaltet ist.

11. Zentrifugalstreuer nach Anspruch 8, **dadurch gekennzeichnet, dass** die Auslauföffnung sich entgegen der Drehrichtung der Schleuderscheibe verschwenkt angeordnet ist.
